# EUROPEAN PATENT APPLICATION

(11) **EP 1 997 376 A1**
(43) Date of publication of application: **03.12.2008**
(21) Application number: 08015737.3
(22) Date of filing: 09.05.2006
(51) Int. Cl.: A01N 25/30, A01P 13/00

(54) **Herbicidal compositions**

(30) Priority: 10.05.2005 US 679496 P
(62) Divisional of application: 06744690.6
(71) Applicant: Syngenta Participations AG, 4058 Basel (CH)
(72) Inventor: Ramachandran, Ravi, Ontario N1G 4Z3 (CA); Shulkin, Anna, Ontario N1G 4Z3 (CA)
(74) Representative: Hölscher, Ingo

(57) **Abstract**

The present invention provides herbicidal compositions comprising broadleaf herbicides and alkyl polyglycosides as well as herbicidal compositions comprising mixtures of broadleaf herbicides, ACCase-inhibiting herbicides and alkyl polyglycosides. The present invention further relates to a method for inhibiting antagonism between broadleaf herbicides and ACCase-inhibiting herbicides when applied post-emergently in compositions containing both classes of herbicides.

## Description

### BACKGROUND OF THE INVENTION

The present invention relates to herbicidal compositions comprising broadleaf herbicides and alkyl polyglycosides as well as herbicidal compositions comprising mixtures of broadleaf herbicides, ACCase-inhibiting herbicides and alkyl polyglycosides. The present invention further relates to a method for inhibiting antagonism between broadleaf herbicides and ACCase-inhibiting herbicides when applied post-emergently in compositions containing both types of herbicides.

In order to increase water solubility, some broadleaf herbicides, such as the synthetic auxin herbicides, are commonly converted into water-soluble salts by reacting them with water-soluble amines. While salts of the herbicidally active acids are relatively easy to manufacture, generally requiring only mixing of the appropriate active acid and a chosen base, the salt derivatives of the herbicidal active acids are normally less biologically effective than a corresponding ester derivative. Prior methods of overcoming this undesirable loss of biological activity were based on employing alkylphenol ethoxylate (APE) surfactants, which significantly decrease the formulation surface tension and improve the formulation spreadability on the leaves resulting in a larger contact area between the active spray solution and the leaf, and as a result faster rate of penetration.

There is a desire to move away from APE surfactants due to potential environmental concerns and it is a further object of the present invention to find non-APE surfactants that are as effective as APE surfactants under the conditions which are characteristic of, for example, synthetic auxin formulations, that is, high electrolyte concentration and high pH.

Herbicide mixtures are frequently used in weed control. Often, one selective herbicide will show great efficacy in controlling several weed species but will have little effect on others. When complete weed control is desired either sequential application of two or more herbicides is required or one application of a mixture of two or more herbicides is required. Successive herbicide application is not cost-effective. However, the use of mixtures of herbicides often fails to achieve the desired results due to apparent antagonism between the herbicides.

Antagonism may be true biological antagonism where, for example, the biochemical effect of one herbicide is partially or wholly destroyed by the second herbicide. Antagonism may also be physical antagonism where either one herbicide or its formulation ingredients wholly or partially prevents the biological uptake of the second herbicide. It is frequently difficult, if not impossible, to identify which of these types of antagonism is operative. Thus the term "apparent antagonism" is an appropriate one to describe the net, observable effect - a decrease in the efficacy of one herbicide when used in conjunction with another.

Past attempts to reduce the antagonism that can occur when using combinations of herbicides can be found in U.S. Patent Nos. 4,447,257; 5,102,442 and 5,428,000.

An example of when apparent antagonism frequently occurs is when grass herbicides and broadleaf herbicides are used simultaneously. ACCase-inhibiting herbicides, for example, are effective in controlling a number of obnoxious grass species in various crops. Most ACCase-inhibiting herbicides have little or no effect, however, on broadleaf weeds.

It is, therefore, desirable to provide new compositions of broadleaf herbicides and ACCase-inbibiting herbicides as well as a novel method for inhibiting the antagonism between broadleaf herbicides and ACCase-inhibiting herbicides when such herbicides are combined for post-emergent application to undesirable vegetation.

### SUMMARY OF THE INVENTION

The present invention relates to herbicidal compositions comprising broadleaf herbicides and alkyl polyglycosides as well as herbicidal compositions comprising mixtures of a) broadleaf herbicides, b) ACCase-inhibiting herbicides and c) alkyl polyglycosides and the use thereof for preventing or controlling weeds in crops of useful plants.

The present invention further relates to the use of alkyl polyglycosides for inhibiting antagonism between broadleaf herbicides and ACCase-inhibiting herbicides when applied post-emergently in compositions containing both classes of herbicides.

### DETAILED DESCRIPTION OF THE INVENTION

Broadleaf herbicides suitable for use in the present invention include those broadleaf herbicides selected from the group consisting of synthetic auxins, acetolactate (ALS) inhibitors, inhibitors of photosynthesis at photosystem II, and mixtures thereof.

The synthetic auxin herbicides for use in the present invention are well known in the art and include clomeprop; 2,4-D; 2,4-DB, dichlorprop; MCPA; MCPB; mecoprop; mecoprop-P; chloramben; dicamba; TBA; clopyralid; fluroxypyr; picloram; triclopyr; quinclorac; quinmerac; benazolin and mixtures thereof; as well as salts or esters thereof.

ALS inhibitors suitable for use as the broadleaf herbicides of the present invention include florasulam, metsulfuron, thifensulfuron, tribenuron and triasulfuron, as well as salts or esters thereof.

Photosynthesis inhibitors for use in the present invention include those broadleaf herbicides selected from the group consisting of bromoxynil and bentazon, as well as salts or esters thereof.

In a preferred embodiment, the broadleaf herbicide comprises mixtures of two or more of the recited broadleaf herbicides. Preferably, the broadleaf herbicide comprises mixtures of two or more synthetic auxins or mixtures of at least one synthetic auxin herbicide and at least one member selected from the group consisting of acetolactate inhibitors and inhibitors of photosynthesis at photosystem II.

The ACCase-inhibiting herbicides for use in the present invention include phenylpyrazolin herbicides such as pinoxaden; aryloxyphenoxypropionic herbicides such as clodinafop; cyhalofop; diclofop; fenoxaprop; fluazifop; haloxyfop; quizalofop; trifop and mixtures thereof, as well as the isomers thereof, for example, fenoxaprop-P; fluazifop-P; haloxyfop-P; quizalofop-P; and cyclohexanedione herbicides such as alloxydim; butroxydim; clethodim; cycloxydim; profoxydim; sethoxydim; tepraloxydim and tralkoxydim; as well as salts or esters thereof. These compounds are known in the art and are described in The Pesticide Manual, Twelfth Edition, British Crop Protection Council or other readily available resources.

The active substances can be present in the various forms usual in the art, that is, in the form of their agriculturally acceptable salts and esters. For example, the active herbicidal constituents may be in the form of their acids, amines, esters, amine salts and alkali metal salts.

Esters suitable for use in the present invention include alkyl esters, for example, methyl, ethyl, propyl, butyl, amyl, or octyl, their secondary forms, iso-butyl, iso-propyl, iso-octyl, methylheptyl and mixed esters; low volatile esters, for example, those derived from butoxyethanol, propylene glycol butanol, iso-octanol, 2-ethyl-hexanol or 2-butoxy-1-methylethyl and glycol esters, such as, those derived from propylene glycol, butoxyemanol, butyl ether ester, dipropylene glycol esters and butoxy ethoxy propanol ester.

Amine salts include primary amine salts, secondary amine salts, tertiary amine salts, quaternary ammonium salts and oligomeric or polymeric alkanolamines.

Primary amines include methylamine, ethylamine, isopropylamine, propylamine, n-butylamine, pentylamine (e.g., 1-amino-pentane and 2-amino-pentane), cyclohexylamine and the corresponding alkanolamine homologues such as monoethanolamine and monoisopropanolamine, aminopropylmorpholine and diglycolamine. Typical secondary amines include dimethylamine, diethylamine, di-isopropylamine and the corresponding alkanolamine homologues such as diethanolamine and di-isopropanolamine. Tertiary amines include trimethylamine, triethylamine, triisopropylamine, tri-n-britylamine and the corresponding alkanolamine homologues such as triethanolamine and tri-isopropanolamine.

The oligomeric or polymeric alkanolamines include those (poly)ethereal amines taught in US Patent No. 6,300,323, the contents of which are incorporated herein by reference.

Preferred amine salts include those salts selected from the group consisting of diethanolamine, diglycolamine, dimethylamine, triethylamine, trimethylamine, triethanolamine, alkanolamine, isopropylamine, di-isopropylamines, tri-isopropylamines, N-oleyl-1,3-propylenediamines and mixed amines. Other salts suitable for use in the present invention include alkai metal salts such as sodium and potassium salts and the salts formed by reaction of other bases such as ammonium hydroxide with the appropriate acids.

Preferred esters of the ALS inhibitors include metsulfuron-methyl, thifensulfuron-methyl and tribenuron-methyl.

Preferred esters of the ACCase-inhibiting herbicides include clodinafop-propargyl; cyhalofop-butyl; diclofop-methyl; fenoxaprop-ethyl; fenoxaprop-P-ethyl; fluazifop-butyl; fluazifop-P-butyl; haloxyfop-methyl; haloxyfop-P-methyl; propaquizafop; quizalofop-ethyl; quizalofop-P-ethyl and trifop-methyl.

When more than one salt and/or ester of the broadleaf herbicide and/or ACCase-inhibitor herbicides are present, the salts and/or esters may be the same or different. In one embodiment, the herbicidal concentrates and compositions of the present invention comprise two or more broadleaf herbicides. In one embodiment, the two or more broadleaf herbicides comprise at least two synthetic auxin herbicides. In a preferred embodiment, at least one synthetic auxin, when added to the herbicidal composition, is present in the form of its diglycolamine salt. In a more preferred embodiment, two or more synthetic auxins are present and, when added to the composition, each is in the form of its diglycolamine salt.

Alkyl polyglycosides known in the art can be used in the invention. The alkyl polyglycoside of the invention may have formula (I):

R₁O(R₂O)_{b}(Z)ₐ (I)

R₁ is a monovalent organic radical having from about 6 to about 30 carbon atoms. R₁ is preferably a C₈₋₂₂ alkyl or alkenyl group, more preferably a C₈₋₁₁ alkyl group. R₂ is a divalent alkylene radical having from about 2 to about 4 carbon atoms. R₂ is preferably ethylene or propylene, more preferably ethylene. b is 0 to about 100. b is preferably 0 to about 12, more preferably 0. Z is a saccharide residue having about 5 to about 6 carbon atoms. Z may be glucose, mannose, fructose, galactose, talose, gulose, altrose, allose, apiose, gallose, idose, ribose, arabinose, xylose, lyxose, or a mixture thereof. Z is preferably glucose. a is an integer from 1 to about 6. a is preferably from 1 to about 3, more preferably about 2.

Preferred compounds of formula (I) are compounds of formula (II): 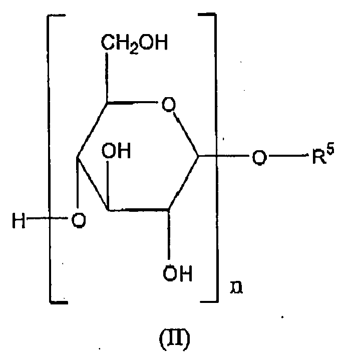 where n is the degree of polymerization and is from 1 to 3, preferably 1 or 2, and R⁵ is a branched or straight chain alkyl group having from 4 to 18 carbon atoms or a mixture of alkyl groups having from 4 to 18 carbon atoms.

Exemplary alkyl polyglycosides include APG®\ 325 (Cognis Corporation, Cincinnati, OH) (an alkyl polyglycoside in which the alkyl group contains 9 to 11 carbon atoms and has an average degree of polymerization of 1.6), PLANTAREN® 2000 (Cognis Corporation, Cincinnati, OH) (an alkyl polyglycoside in which the alkyl group contains 8 to 16 carbon atoms and has an average degree of polymerization of 1.4), PLANTAREN® 1300 (Cognis Corporation, Cincinnati, OH) (an alkyl polyglycoside in which the alkyl group contains 12 to 16 carbon atoms and has an average degree of polymerization of 1.6), Atplus® 452 (Uniqema) or AGNIQUE® PG 8107 (Cognis Corporation, Cincinnati, OH) (an alkyl polyglycoside in which the alkyl group contains 8 to 10 carbon atoms and has an average degree of polymerization of 1.7), Atplus® 438 (Uniqema) or AGNIQUE® PG 9116 (Cognis Corporation, Cincinnati, OH) (an alkyl polyglycoside in which the alkyl group contains 9 to 11 carbon atoms and has an average degree of polymerization of 1.6) and AGNIQUE® PG 8105 (Cognis Corporation, Cincinnati, OH) (an alkyl polyglycoside in which the alkyl group contains 8 to 10 carbon atoms and has an average degree of polymerization of 1.5).

In a preferred embodiment, the alkyl polyglycoside is selected from the group consisting of alkyl polyglycosides comprising an alkyl group containing 8-10 carbon atoms and an average degree of polymerization of 1.5 to 1.7; an alkyl group containing 9-11 carbon atoms and an average degree of polymerization of 1.3 to 1.6; and mixtures thereof. The alkyl polyglycosides will typically be present in the herbicidal concentrates of the invention in an amount of about 0.1 to about 25% by weight, preferably in an amount of about 5 to 20% by weight. Upon dilution or addition directly to the spray tank, the alkyl polyglycosides will typically be present in an amount of 0.05% w/v to 5.0% w/v.

The herbicide mixtures of the present invention provide broad-spectrum weed control, however, absent the alkyl polyglycosides, the mixtures of herbicides may fail to achieve the desired results due to apparent antagonism between the herbicides.

Antagonism may be true biological antagonism where, for example, the biochemical effect of one herbicide is partially or wholly destroyed by the second herbicide. Antagonism may also be physical antagonism where either one herbicide or its formulation ingredients wholly or partially prevents the biological uptake of the second herbicide. It is frequently difficult, if not impossible, to identify which of these types of antagonism is operative. Thus the term "apparent antagonism" is an appropriate one to describe the net, observable effect - a decrease in the efficacy of one herbicide when used in conjunction with another. The percent reduction in ACCase antagonism obtained by using compositions of the present invention can be calculated as follows: (((% control of ACCase + broadleaf herbicide + APG) - (% control of ACCase + broadleaf herbicide without APG))/(% control of ACCase + broadleaf herbicide + APG))*100.

One embodiment of the present invention comprises a herbicidal composition comprising a) at least one broadleaf herbicide and c) at least one alkyl polyglycoside. In a preferred embodiment, the herbicidal composition comprising a) at least one broadleaf herbicide and c) at least one alkyl polyglycoside is a herbicidal concentrate wherein the total concentration of broadleaf herbicides present is at least 50 g active ingredient/L.

In one embodiment, the present invention is directed to a herbicidal composition comprising a) at least one broadleaf herbicide; b) at least one ACCase-inhibiting herbicide; and c) at least one alkyl polyglycoside.

These compositions are particularly effective at inhibiting the apparent antagonism exhibited with mixtures of broadleaf herbicides and ACCase-inhibiting herbicides with respect to certain grass weeds, such as Italian ryegrass, wild oats and green foxtail.

In one embodiment, the present invention is directed to a herbicidal composition comprising a) at least one broadleaf herbicide; b) at least one ACCase-inhibiting herbicide; and c) at least one alkyl polyglycoside; wherein the herbicidal composition is obtained by combining, for example in a spray tank, a first formulated herbicidal composition comprising at least one broadleaf herbicide and a second formulated herbicidal composition comprising at least one ACCase-inhibiting herbicide; and wherein at least one alkyl polyglycoside is present in either the first formulated herbicidal composition, the second formulated herbicidal composition, in both the first and second formulated herbicidal compositions or added as a separate component to the herbicidal composition, for example, when the alkyl polyglycoside is combined with the at least one ACCase-inhibiting herbicide and the at least one broadleaf herbicide in a spray tank.

The term "formulated herbicidal composition" as used herein means herbicidal compositions, preferably herbicidal concentrates, comprising at least one herbicidally active ingredient and other formulations components such as surfactants, adjuvants, stabilizers and the like. Formulated herbicidal compositions include commercially available pro-mixes that can be used upon dilution in a spray tank or tank mixed with other formulated herbicidal compositions, other pesticidally active ingredients, adjuvants, fertilizers and the like.

One embodiment of the present invention is directed to a method of inhibiting the antagonism of herbicidal compositions containing at least one broadleaf herbicide and at least one ACCase-inhibiting herbicide, said method comprising adding an antagonism reducing effective amount of at least one alkyl polyglycoside to a mixture of at least one broadleaf herbicide and at least one ACCase-inhibiting herbicide; wherein antagonism to biological effectiveness is reduced compared to similarly formulated compositions absent the alkyl polyglycoside.

In one embodiment, the alkyl polyglycoside is first combined with at least one broadleaf herbicide prior to mixing with at least one ACCase-inhibiting herbicide.

In one embodiment, the alkyl polyglycoside is first combined with the at least one ACCase-inhibiting herbicide prior to mixing with the at least one broadleaf herbicide. As used herein, the term "herbicidally effective amount" means the amount of herbicide compound which adversely controls or modifies plant growth. Controlling or modifying effects include all deviation from natural development, for example, killing, retardation, leaf burn, albinism, dwarfing and the like. The term plants refers to all physical parts of a plant, including seeds, seedlings, saplings, roots, tubers, stems, stalks, foliage and fruits.

The invention relates also to herbicidal compositions obtained by i) diluting a herbicidal concentrate of the present invention in a suitable carrier, such as water or liquid nitrogen fertilizer, such that the final concentration of the herbicides present is between about 0.01% and about 10% of active ingredient (a.i.).

When both the broadleaf herbicides and the ACCasc-inhibiting herbicides are present in the herbicidal compositions of the present invention, there are no specific limitations regarding the blend ratio of the active ingredients of the present invention as this will depend upon time and method of application, types and amount of weeds, weather conditions, soil types and the like. Typically, however, the broadleaf herbicides may be incorporated in an amount of 0.01 to 100 parts by weight per one part of ACCase-inhibiting herbicide(s).

In one embodiment, the invention relates to a method for preventing or controlling weeds in crops of useful plants, said method comprising treating the plants, plant parts or locus thereof with the herbicidal composition described herein. For example, the invention relates to a method for preventing or controlling weeds in crops of useful plants, said method comprising forming a herbicidal composition comprising i) combining a) at least one broadleaf herbicide, b) at least one ACCase-inhibiting herbicide and c) at least one alkyl polyglycoside in a suitable carrier, such as water or liquid nitrogen fertilizer, in an amount sufficient to obtain the desired final concentration of each of the active ingredients (a.i.) and ii) treating the desired area, such as plants, the plant parts or the locus thereof, with said composition.

The term plants refers to all physical parts of a plant, including seeds, seedlings, saplings, roots, tubers, stems, stalks, foliage and fruits.

The composition according to the invention is suitable for all methods of application conventionally used in agriculture. The compositions according to the invention are preferably used for post-emergence control of weeds.

The compositions according to the invention are suitable for combating and/or preventing weeds in crops of useful plants, preferably cereal crops including wheat, oats, barley and rye. "Crops" are to be understood also to include those crops that have been made tolerant to pests and pesticides, as a result of conventional methods of breeding or genetic engineering. The components used in the composition of the invention can be applied in a variety of ways known to those skilled in the art, at various concentrations. The rate at which the compositions are applied will depend upon the particular type of weeds to be controlled, the degree of control required, and the timing and method of application.

Crop areas are areas of land on which the cultivated plants are already growing or in which the seeds of those cultivated plants have been sown, and also areas of land on which it is intended to grow those cultivated plants.

Other active ingredients such as herbicides, plant growth regulators, algicides, fungicides, bactericides, viricides, insecticides, acaricides, nematicides or molluscicides may be present in the concentrates of the present invention or may be added as a tank-mix partner.

The compositions of the invention may further comprise other additives. Such additives include safeners, thickeners, flow enhancers, wetting agents, antifoaming agents, biocides, buffers, chelating agents, lubricants, fillers, drift control agents, deposition enhancers, evaporation retardants, frost protecting agents, insect attracting odor agents, UV protecting agents, fragrances, and the like. The thickener may be a compound that is soluble or able to swell in water, such as, for example, polysaccharides of xanthans (e.g., anionic heteropolysaccharides), alignates, guars or celluloses such as RHODOPOL® 23 (Xantham Gum)(Rhodia Inc., Cranbury, NJ); synthetic macromolecules, such as polyethylene glycols, polyvinyl pyrrolidones, polyvinyl alcohols, polycarboxylates of swellable structure-forming silicates such as pyrogenic or precipitated silicic acids, bentonites, montmorillonites, hectonites, or attapulgites; or organic derivatives of aluminum silicates. The frost protecting agent may be, for example, ethylene glycol, propylene glycol, glycerol, diethylene glycol, triethylene glycol, tetraethylene glycol, urea, or mixtures thereof. Representative anti-foam agents are silica, polydialkylsiloxanes, in particular polydimethylsiloxanes, fluoroaliphatic esters or perfluoroalkylphosphonic/perfluoroalkylphosphinic acids or the salts thereof and mixtures thereof. Preferred are polydimethylsiloxanes, such as Dow Corning® Antifoam A. Representative biocides include 1,2-benzisothiazolin-3-one, available as PROXEL® GXL (Arch Chemicals).

The compositions of the invention may be mixed with fertilizers and/or adjuvants such as non-ionic surfactants, crop oil concentrates or methylated esters of vegetable oils. Representative adjuvants include, but are not limited to, ADIGOR™ adjuvant, SCORE® adjuvant and TURBOCHARGE® adjuvant each of which are available from Syngenta Crop Protection Canada. The fertilizers may comprise, for example, either nitrogen based such as 28-0-0 or 30-0-0 or nitrogen, phosphorous, and/or potassium. In one embodiment, the fertilizer may be 10-34-0 fertilizer.

The compositions of the invention may be used in conventional agricutural methods. For example, the compositions of the invention may be mixed with water and/or fertilizers and may be applied preemergence and/or postemergence to a desired locus by any means, such as airplane spray tanks, knapsack spray tanks, farm equipment used in ground spraying (e.g., boom sprayers, hand sprayers), and the like.

The following examples illustrate further some of the aspects of the invention but are not intended to limit its scope. Where not otherwise specified throughout this specification and claims, percentages are by weight.

### EXAMPLES

Table 1 sets forth the formulation details of the synthetic auxin mixtures used in the following examples. Each of the synthetic auxin mixtures in the following examples contained dicamba in an amount of 62.5 g acid equivalent (a.e.)/L, MCPA in an amount of 275 g a.e./L and racemic-mecoprop in an amount of 125 g a.e/L or mecoprop-P in an amount of 62.5 g a.e./L (d-isomer equivalent). The salts present in the following examples are the diethanolamine (DEA), dimethylamine (DMA) and diglycolamine (DGA) salts of the recited synthetic auxins. All formulations contained a sodium lignosulfonate dispersant and ethylenediamine tetraacetic acid chelating agent that acts as a sequestering agent to de-antagonize metal ions such as Calcium and Magnesium in hard water.

**TABLE 1 Synthetic Auxin mixture formulations**

| | Dicamba | MCPA | CMPP Acid | Surfactant |
|---|---|---|---|---|
| SA 1 | DMA | DMA/DEA | Racemic Mecoprop DEA | APE¹ (3.5 %w/w) |
| SA 2 | DMA | DMA/DGA | Mecoprop-P DGA | APE¹ (3.5 %w/w) |
| SA 3 | DGA | DGA | Mecoprop-P DGA | APE¹ (3.5 %w/w) |
| SA 4 | DGA | DGA | Mecoprop-P DGA | Alkoxylated alcohol² (8.7 %w/w) |
| SA 5 | DGA | DGA | Mecoprop-P DGA | POE (20) Tallow Alkylamine³ (8.8 %w/w) |
| SA 6 | DGA | DGA | Mecoprop-P DGA | Tristyrylphenol ethoxylate⁴ (8.6 %w/w) |
| SA 7* | DGA | DGA | Mecoprop-P DGA | APG⁵ (10.15 %w/w) |

| | | | | |
|---|---|---|---|---|
| * Synthetic auxin formulation within the scope of the present invention 1 Octylphenol ethylene oxide condensate having an average of 9.5 moles of ethoxylation 2 Flo Mo Low Foarn® C9-C11-iso,C-10-iso, ethoxylated alcohol (Akzo-Nobel) 3 Atlas® G-3780A polyoxyethylene (20) Tallow alkylamine (Uniqema) 4 Soprophor® BSU tristyrylphenol (16EO) ethoxylate (Rhodia Inc., Cranbury, NJ) 5 Alkyl Polyglycoside in which the alkyl group contains 8 to 10 carbon atoms and has an average degree of polymerization of from 1.5 to 1.7 | | | | |

Formulation SA 4 was not considered for further testing due to long-term stability issues. Formulations SA 1, SA 5, SA 6 and SA 7* were subjected to greenhouse testing to determine efficacy on a variety of dicot weed species. Ratings were taken at 21 days after application (21 DAA). The results of this testing is reported in Table 2.

**TABLE 2: Greenhouse 21 DAA Efficacy Ratings on Dicot Weeds**

| **Test Crop** | **Rate (gai/ha)** | **Efficay Rating (% weed control)** | | | | | |
|---|---|---|---|---|---|---|---|
| | | **95 %** | **90 %** | **85 %** | **80 %** | **75 %** | **70%** |
| *S. arvensis* (Sow Thistle) | 300 | | SA1 **SA7*** | SA 5 SA 6 | | | |
| | 600 | SA 5 | SA1 **SA7*** SA 6 | | | | |
| *T. arvense* (Stinkweed) | 300 | | | | SA1 SA 5 SA 6 | | **SA7*** |
| | 600 | | **SA7*** | SA 6 | SA1 SA 5 | | |
| *C. album* (lamb's quarters) | 300 | | | | **SA7*** SA 5 SA 6 | | |
| | 600 | | | | SA1 **SA7*** SA 5 SA 6 | | |
| *P. convolvulus* (Wild Buckwheat) | 300 | | SA 5 | | SA1 | | **SA7*** SA 6 |
| | 600 | SA 6 | **SA7*** SA1 SA 5 | | | | |
| *P. persicaria* (Lady's thumb) | 300 | | **SA7*** | SA1 | | | SA 5 SA 6 |
| | 600 | | **SA7*** SA1 | | | | SA 5 SA 6 |

Across most of the tested weed species and rates, formulation SA 7* was generally the best performing formulation and demonstrated the highest level of weed control compared to formulations containing surfactants outside of the scope of the present invention.

Formulations SA 1 and SA 7* were selected for field testing. The rates, weed species and test results are set forth in Table 3.

**TABLE 3: Results of weed control from Field biology testing of SA 1 and SA 7***

| Treatment | Rate (g ai/ha) | Cleavers | Hemp-Nettle | Volunteer canola | Sheperds purse | Stinkweed | Wild Mustard |
|---|---|---|---|---|---|---|---|
| | | % control | % control | % control | % control | % control | % control |
| SA 1 | 400 | 66 | 60 | 95 | 98 | 99 | 100 |
| | 600 | 76 | 58 | 97 | 98 | 99 | 100 |
| SA 7* | 400 | 65 | 64 | 97 | 98 | 99 | 100 |
| | 600 | 78 | 69 | 98 | 98 | 99 | 100 |

| | | | | | | | |
|---|---|---|---|---|---|---|---|
| * Synthetic auxin formulation within the scope of the present invention | | | | | | | |

Both formulations exhibited excellent crop safety on wheat and barley. Formulation SA 7* performed as well as or better than formulation SA 1 across the various weed species evaluated. Formulation SA 7* also exhibited better hemp-nettle weed control compared to formulation SA 1 across all trials. Hemp-nettle is one of the harder to control broad leaf weeds with auxin based herbicides, and thus the significant improvement as demonstrated by the data supports the fact that alkyl polyglycoside surfactant in formulation SA 7* are more effective at increasing the penetration of the herbicidal active ingredients in to the weeds.

Table 4 compares the toxicity profile of formulations SA 1 containing an alkylphenol ethoxylate surfactant and SA 7* containing an alkyl polyglycoside surfactant.

**TABLE 4: Comparison of the Acute Toxicity of SA 1 and SA 7***

| | SA 1 | SA 7* |
|---|---|---|
| Acute Oral | >1600 mg/kg | 1750 mg/kg |
| Acutc Dermal | >4000 mg/kg | 5000 mg/kg |
| Acute Inhalation | Not Available | >2.57 mg/L |
| Eye Irritation | SEVERE irritation | MODERATELY irritating |
| Skin Irritation | Slightly irritating | Slightly irritating |
| Skin Sensitization | Positive | Positive |

| | | |
|---|---|---|
| * Synthetic auxin formulation within the scope of the present invention | | |

Data in Table 4 clearly demonstrates that the formulations of the present invention, that is, formulations containing an alkyl polyglycoside surfactant exhibit an overall improvement in the toxicity profile of the product compared to a formulation containing the alkylphenol ethoxylate surfactant.

The following examples (Tables 5-7) demonstrate the reduction in antagonism between synthetic auxin herbicides and ACCase-inhibiting herbicides obtained by using compositions of the present invention. The ACCase-inhibitors used were clodinafop-propargyl in the form of HORIZON® 240EC herbicide, tralkoxydim in the form of ACHIEVE® liquid herbicide and pinoxadcn in the form of AXIAL™ 100EC herbicide, all of which are commercially available from Syngenta Crop Protection Canada Inc. A crop oil adjuvant, SCORE®, was added to the spray tank with the HORIZON® 240EC herbicide in an amount of 0.8% volume/volume, that is, 800 mL of SCORE® adjuvant in 100L of water per hectare. The synthetic auxin formulations, including type of salt and surfactant, used in the following examples are set forth in Table 1. The synthetic auxin formulations outside the scope of the present invention contained an alkyl phenol ethoxylate (APE) surfactant. The synthetic auxin formulation of the present invention contained an alkyl polyglycoside (APG) surfactant.

Table 5 demonstrates the unexpected benefits obtained by using mixtures of compositions of the present invention with clodinafop on wild oat (WO) and/or green foxtail (GFT) control.

The average percentage of wild oat and green foxtail control in a greenhouse testing are presented in Table 5. HORIZON® 240EC was applied in an amount of either 10 or 20 g active ingredient (a.i.)/hectare, as set forth in the Table, the synthetic auxin mixture was applied at a rate of 600 g a.i./hectare.

**TABLE 5: Greenhouse Efficacy Results (Mean % Control)**

| | | Wild Oats | | Green Foxtail | |
|---|---|---|---|---|---|
| | Rate of Clodinafop (g a.i./hectare) | 10 | 20 | 10 | 20 |
| 1 | HORIZON® | 90 | 98 | 94 | 99 |
| 2 | HORIZON® + SA 1 | 27 | 68 | 69 | 97 |
| 3 | HORIZON® + SA 7* | 60 | 90 | 82 | 97 |

| | | | | | |
|---|---|---|---|---|---|
| * Synthetic auxin formulation within the scope of the present invention | | | | | |

The results of green house testing of HORIZON® 240EC alone, and its mixtures with synthetic auxin formulations SA 1 and SA 7* is given in Table 5. Data in Table 5 show that there is a significant reduction in wild oat antagonism in tank mix combinations of HORIZON® 240EC with formulation SA 7*, compared to formulation SA 1. The wild oat control of the ACCase-inhibiting herbicide, clodinafop-propargyl in HORIZON® 240EC, at 20 gai/ha when applied alone is 98%. However, when it is combined with a synthetic auxin herbicide, there is a significant reduction in the grass control activity of HORIZON® 240EC. For example, at 20 gai/ha rate of clodinafop-propargyl in combination with 600 gai/ha of the synthetic auxin herbicides in formulation SA 1, the wild oat control is observed at 68%. This is due to the well-known biological antagonism of ACCase-inhibiting herbicides in the presence of synthetic auxin herbicides. However, in the present invention, an unexpectedly significant increase in the wild oat control to 90% was observed for HORIZON® 240EC when combined with the synthetic auxin formulation SA 7*, which contains an APG. In other words, a decrease in antagonism of 24% at 20 gai/ha of clodinafop-propargyl and 55% at 10 gai/ha of clodinafop-propargyl was observed for mixtures with the synthetic auxin formulation SA 7* compared to the mixtures with the synthetic auxin formulation SA 1. This is significant as it will result in increased consistency in biological efficacy, thus reducing the negative impact of other variables that may also increase antagonism.

Similarly an increase in green foxtail control is seen for HORIZON® 240EC when combined with synthetic auxin formulation SA 7*, compared to when HORIZON® 240EC is combined with formulation SA 1. The differences are more pronounced at 10 gai/ha of clodinafop propargyl than at 20 gai/ha. As can be seen from the above data, the compositions of the present invention comprising synthetic auxin herbicides, ACCase-inhibiting herbicides and an alkyl polyglycoside, such as SA 7*, exhibit a reduction in the antagonism of wild oat control and green foxtail control compared to compositions of synthetic auxins and an ACCase-inhibiting herbicide not containing an alkyl polyglycoside, such as SA 1.

Table 6 demonstrates the unexpected benefits obtained by using mixtures of compositions of the present invention with tralkoxydim on wild oat (WO) and/or Italian ryegrass (IR) control.

The average percentage of wild oat and Italian ryegrass control at 12 days after application in a greenhouse test are presented in Table 6. ACHIEVE® liquid herbicide was applied in an amount of 12.5, 25 or 50g active ingredient (a.i.)/hectare, as set forth in the Table, the synthetic auxin mixture was applied at a rate of 600 g a.i./hectare. A crop oil adjuvant, TURBOCHARGE® adjuvant, was added to the spray tank with the ACHIEVE® liquid herbicide in an amount of 0.5% volume/volume.

**TABLE 6: Greenhouse Efficacy Results (Mean % Control)**

| | | Wild Oats | | | Italian Ryegrass | | |
|---|---|---|---|---|---|---|---|
| | Rate of Tralkoxydim (g a.i./hectare) | 12.5 | 25 | 50 | 12.5 | 25 | 50 |
| 1 | ACHIEVE® | 93.3 | 92.7 | 96 | 59.3 | 86.7 | 91.7 |
| 2 | ACHIEVE® + ACHIEVE® + SA 1 | 26.7 | 51.7 | 85 | 31.7 | 35 | 58.3 |
| 3 | ACHIEVE® + SA 7* SA 7* | 48.3 | 83.3 | 92.3 | 40 | 58.3 | 67.3 |

| | | | | | | | |
|---|---|---|---|---|---|---|---|
| * Synthetic auxin formulation within the scope of the present invention | | | | | | | |

Table 7 demonstrates the unexpected benefits obtained by using mixtures of compositions of the present invention with pinoxaden on wild oat (WO) and/or Italian ryegrass (IR).

The average percentage of wild oat and Italian ryegrass control at 12 days after application in a greenhouse test are presented in Table 7. AXIAL® 100EC herbicide was applied in amounts of 7.5 and 15g active ingredient (a.i.)/hectare, as set forth in the Table, the synthetic auxin mixture was applied at a rate of 600 g a.i./hectare. A methylated ester of rapeseed oil, ADIGOR™ adjuvant, was added to the spray tank with the AXIAL™ 100EC herbicide in an amount of 0.7% volume/volume.

**TABLE 7: Greenhouse Efficacy Results (Mean % Control)**

| | | Wild Oats | | Italian Ryegrass | |
|---|---|---|---|---|---|
| | Rate of Pinoxaden (g a.i./hectare) | 7.5 | 15 | 7.5 | 15 |
| 1 | AXIAL® | 87.3 | 95 | 95.3 | 97 |
| 2 | AXIAL® + SA1 | 40 | 58.3 | 69.3 | 85.7 |
| 3 | AXIAL® + SA 7* | 41.7 | 45 | 86.7 | 95.7 |

| | | | | | |
|---|---|---|---|---|---|
| * Synthetic auxin formulation within the scope of the present invention | | | | | |

The following examples (Tables 8 and 9) demonstrate the reduction in antagonism between ACCase-inhibiting herbicides and a different combination of synthetic auxin herbicides (dicamba and fluroxypyr) obtained by using compositions of the present invention. The synthetic auxin herbicides used were a mixture of the diglycolamine salt of dicamba and fluroxypyr meptyl in amount sufficient to provide 78.5 g/ha dicamba and 105 g/ha fluroxypyr. The composition of the present invention was in the form of an emulsifiable concentrate premix containing dicamba, fluroxypyr, 7% w/w of C₈-C₁₀ oligomeric ethers of d-glucose alkyl polyglycoside, solvent and inert components. The comparative examples, those not containing an alkyl polyglycoside (APG) surfactant, were prepared by tank mixing the commercially available diglycolamine salt of dicamba in the form of CLARITY® herbicide, available from BASF, and fluroxypyr meptyl in the form of STARANE® herbicide, available from Dow Agroscience, in order to provide the same amounts of active ingredient as in the premix composition of the present invention. A crop oil adjuvant, SCORE®, was added to the spray tank with the HORIZON® 240EC herbicide in an amount of 0.8% volume/volume, that is, 800 mL of SCORE® adjuvant in 100L of water per hectare. A methylated ester of rapeseed oil, ADIGOR™ adjuvant, was added to the spray tank with the AXIAL™ 100EC herbicide in an amount of 0.7% volume/volume.

Tables 8 and 9 demonstrate the unexpected benefits obtained by using mixtures of compositions of the present invention with clodinafop and pinoxaden on wild oat (WO) and/or Italian ryegrass (IR) control.

The average percentage of wild oat and Italian ryegrass control in greenhouse testing are presented in Tables 8 and 9. HORIZON® 240EC was applied in an amount of 10, 20 or 40 g active ingredient (a.i.)/hectare, as set forth in Table 8. AXIAL™ herbicide was applied in an amount of 3.75, 7.5 or 15 g/ha, as set forth in Table 9.

**TABLE 8: Greenhouse Efficacy Results (Mean % Control)**

| | | Wild Oats | | | Italian Ryegrass | | |
|---|---|---|---|---|---|---|---|
| | Rate of Clodinafop (g a.i./hectare) | 10 | 20 | 40 | 10 | 20 | 40 |
| 1 | HORIZON® | 53.3 | 92.7 | 96 | 36.7 | 63.3 | 86 |
| 2 | HORIZON® + CLARITY® + STARANE® | 79 | 92 | 95.3 | 23 | 58.3 | 67.7 |
| 3 | HORIZON® + DICAMBA, FLUROXYPYR, APG Premix* | 87.3 | 92 | 94.3 | 25 | 44 | 74.3 |

| | | | | | | | |
|---|---|---|---|---|---|---|---|
| * Synthetic auxin formulation within the scope of the present invention | | | | | | | |

**TABLE 9: Greenhouse Efficacy Results (Mean % Control)**

| | | Wild Oats | | | Italian Ryegrass | | |
|---|---|---|---|---|---|---|---|
| | Rate of Pinoxaden (g a.i./hectare) | 3.75 | 7.5 | 15 | 3.75 | 7.5 | 15 |
| 1 | AXIAL® | 66.7 | 87.3 | 95 | 84.3 | 95.3 | 97 |
| 2 | AXIAL® + CLARITY® + STARANE® | 46.3 | 73 | 87.7 | 73.3 | 87 | 95.7 |
| 3 | AXIAL® + DICAMBA, FLUROXYPYR, APG Premix* | 50 | 79.3 | 93.7 | 82 | 96 | 95.7 |

| | | | | | | | |
|---|---|---|---|---|---|---|---|
| * Synthetic auxin formulation within the scope of the present invention | | | | | | | |

Table 10 sets forth the field biology results of mixtures of HORIZON® 240EC and synthetic auxin formulations SA 1 to SA 7*. HORIZON® 240EC was applied in an amount of 56 g a.i./hectare. The synthetic auxin mixtures were applied at a rate of 600 g a.i./hectare.

Table 10 demonstrates the unexpected benefits obtained by using mixtures of compositions of the present invention with clodinafop on wild oat (WO) and/or green foxtail (GFT) control in spring wheat and durum wheat. The average percentage of wild oat control for field testing including the number of duplicate experiments (dp) and the range of percent wild oat (WO) control are set forth in Table 10.

**TABLE 10: Field Testing**

| | SA 1 | SA 2 | SA 3 | SA 7* | HORIZON alone |
|---|---|---|---|---|---|
| Dicamba | DMA | DMA | DGA | DGA | -- |
| MCPA | DMA/DEA | DMA/DGA | DGA | DGA | -- |
| Meeoprop | Mecoprop (racemic) DEA | Mecoprop-P DGA | Mecoprop-P DGA | Mecoprop-P DGA | -- |
| Surfactant | APE | APE | APE | APG | -- |
| WO control (in tank mixes with HORIZON 240EC) (3dp) (field - 2002) | 78% (78-79) | 75% (72-77) | 77% (74-79) | -- | 89% (80-96) |
| WO control (in tank mixes with HORIZON 240EC) (5dp) (field - 2004) | 84% (57-94) | -- | -- | 89% (72-97) | 92% (81-97) |

| | | | | | |
|---|---|---|---|---|---|
| * Synthetic auxin formulation within the scope of the present invention | | | | | |

Results of field biological efficacy study shown in table 10 confirm the improved biological performance of the synthetic auxin formulation SA 7* observed in the green house trials (shown in Table 5), and discussed above. The eight (8) field trials conducted between 2002 and 2004 research programs show that the wild oat control of HORIZON 240EC is superior when combined with the synthetic auxin formulation SA 7*, than when it is combined with formulation SA 1 (89% vs 84%). In addition, combinations with SA 7* provides a much better consistency of weed control across all trials and sites tested than combination with formulation SA 1 (72-97% for SA 7* vs 57-94% for SA 1).

As can be seen from the above data in Table 10, the compositions of the present invention comprising broadleaf herbicides, such as synthetic auxin herbicides, ACCase-inhibiting herbicides and an alkyl polyglycoside exhibit a reduction in the antagonism of wild oat control compared to compositions of synthetic auxins and an ACCase-inhibiting herbicide not containing an alkyl polyglycoside.

Although only a few exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention as defined in the following claims.

## Claims

1. A herbicidal concentrate comprising
a) at least one broadleaf herbicide selected from the group consisting of synthetic auxins, acetolactate inhibitors, inhibitors of photosynthesis at photosystcm II, and mixtures thereof; and
c) at least one alkyl polyglycoside.

2. The herbicidal concentrate of claim 1, wherein the alkyl polyglycoside comprise compounds of formula (II): 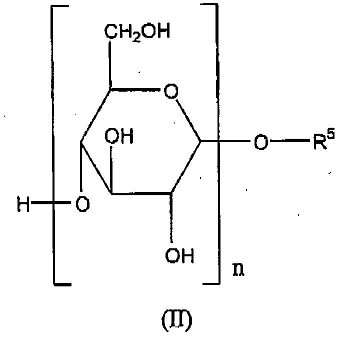 where n is the degree of polymerization and is from 1. to 3 and R⁵ is a branched or straight chain alkyl group having from 4 to 18 carbon atoms or a mixture of alkyl groups having from 4 to 18 carbon atoms.

3. The herbicidal concentrate of claim 2, wherein the alkyl polyglycoside comprises at least one member selected from the group consisting of alkyl polyglycosides comprising an alkyl group containing 8-10 carbon atoms and an average degree of polymerization of 1.5 to 1.7; an alkyl group containing 9-11 carbon atoms and an average degree of polymerization of 1.3 to 1.6; and mixtures thereof.

4. The herbicidal concentrate of claim 1 wherein the broadleaf herbicide comprises at least one synthetic auxin herbicide selected from the group consisting of clomeprop; 2,4-D; 2,4-DB, dichlorprop; MCPA; MCPB; mecoprop; mecoprop-P; chloramben; dicamba; TBA; clopyralid; fluroxypyr; picloram; triclopyr; quinclorac; quinmerac; and benazolin, and the agriculturally acceptable salts and esters thereof.

5. The herbicidal concentrate of claim 4 wherein at least one synthetic auxin herbicide, when added to the composition, is in the form of its diglycolamine salt.

6. The herbicidal concentrate of claim 4 comprising two or more synthetic auxin herbicides.

7. The herbicidal concentrate of claim 6 wherein each of the synthetic auxin herbicides, when added to the composition, are in the form of its diglycolamine salt.

8. The herbicidal concentrate of claim 1 wherein the broadleaf herbicide comprises at least one acetolactate inhibitor selected from the group consisting of florasulam, metsulfuron, thifensulfuron, tribenuron and triasulfuron, as well as salts or esters thereof.

9. The herbicidal concentrate of claim 8 wherein the acetolactate inhibitor comprises at least one member selected from the group consisting of metsulfuron-methyl, thifensulfuron-methyl and tribenuron-methyl.

10. The herbicidal concentrate of claim 1 wherein the broadleaf herbicide comprises at least one inhibitor of photosynthesis at photosystem II selected from the group consisting of bromoxynil and bentazon, as well as salts or esters thereof.

11. The herbicidal concentrate of claim 1 wherein the broadleaf herbicide comprises a mixture of at least one synthetic auxin herbicide and at least one member selected from the group consisting of acetolactate inhibitors and inhibitors of photosynthesis at photosystem II.
